(19) Europäisches Patentamt
European Patent Office
Office européen des brevets

(11) Veröffentlichungsnummer: **0 007 460**
**B1**

(12) **EUROPÄISCHE PATENTSCHRIFT**

(45) Veröffentlichungstag der Patentschrift: **15.09.82**

(51) Int. Cl.³: **C 08 L 25/00,** C 08 L 71/04, C 08 K 5/52

(21) Anmeldenummer: **79102182.7**

(22) Anmeldetag: **29.06.79**

(54) **Flammhemmende Polymermassen.**

(30) Priorität: **04.07.78 GB 2878578**
**09.03.79 GB 7908298**

(43) Veröffentlichungstag der Anmeldung:
**06.02.80 Patentblatt 80/3**

(45) Bekanntmachung des Hinweises auf die Patenterteilung:
**15.09.82 Patentblatt 82/37**

(84) Benannte Vertragsstaaten:
**BE DE FR GB IT NL**

(56) Entgegenhaltungen:
**DE-A-2 706 447**
**DE-A-2 750 467**
**DE-B-2 243 788**
**US-A-3 883 613**
**US-A-3 966 677**

(73) Patentinhaber: **CIBA-GEIGY AG, Patentabteilung Postfach, CH-4002 Basel (CH)**

(72) Erfinder: **Clubley, Brian George, 6 Evesham Grove, Sale, Cheshire (GB)**
Erfinder: **Hyde, Thomas Gerald, Dr., 4 Verdure Avenue Brooklands, Sale, Cheshire (GB)**
Erfinder: **Davis, Boyce Ian David, 28 Yew Tree Park Road Cheadle Hulme, Cheadle, Cheshire (GB)**

**EP 0 007 460 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Flammhemmende Polymermassen

Vorliegende Erfindung betrifft flammhemmende Massen, die erhebliche Anteile eines thermoplastischen Polymeren aus einem vinylaromatischen Monomeren wie Styrol und Copolymeren und Polymergemengen, die ein Polymer aus einem vinylaromatischen monomeren enthalten, umfassen.

Eine Polystyrol und einen aromatischen Polyäther, beispielsweise Polystyrol und Polyphenylenoxyd, enthaltende Polymermasse ist brennbar, und wo Flammfestigkeit erforderlich ist, macht man üblicherweise die Polymeren flammwidrig durch Zusatz von Flammhemmstoffen, die Phosphor, Halogen, Antimon oder eine Kombination davon enthalten. Das Triarylphosphat Triphenylphosphat ist als Flammhemmstoff für diese Polymermassen beschrieben worden. Liegt jedoch diese Verbindung in den für Flammwidrigkeit nötigen Mengen vor, so tritt ein erheblicher Abfall in der Formbeständigkeit in der Wärme ein. Ferner ist Triphenylphosphat zu flüchtig und verdunstet aus der Masse während der Verarbeitung des Polymeren, wenn hohe Verarbeitungstemperaturen angewandt werden, d. h. über 200°C. Deshalb muß anfänglich ein Überschuß Triphenylphosphat in die Polymermasse eingearbeitet werden, um auf diesen Verlust bei der Verarbeitung Rücksicht zu nehmen. Trimesitylphosphat wurde in US-Patentschrift Nr. 3 883 613 als weiterer Flammhemmstoff für Polystyrol/Polyphenylenoxydmassen beschrieben. Dieses Phosphat führt nicht zu einer deutlichen Abnahme der Formbeständigkeit in der Wärme, aber seine flammhemmenden Eigenschaften sind unzureichend.

Es besteht also ein Bedarf für einen Zusatzstoff, der gute Flammwidrigkeit ergibt, aber die Formbeständigkeit des Polymeren in der Wärme in geringerem Ausmaß als Triphenylphosphat beeinflußt.

Überraschend wurde nun gefunden, daß gewisse Triarylphosphate die Eigenschaften einer annehmbaren Formbeständigkeit in der Wärme mit ausreichender Flammhemmung kombinieren und eine niedrigere Flüchtigkeit als Triphenylphosphat besitzen.

Gegenstand vorliegender Erfindung sind demnach Massen bestehend aus einem Triarylphosphatester und einem Polymeren aus Styrol oder einem anderen vinylaromatischen Monomeren oder aus einem Copolymeren aus Styrol und einem anderen Monomeren oder aus einem Polymergemenge aus diesen Polymeren, dadurch gekennzeichnet, daß sie einen Triarylphosphatester der Formel I

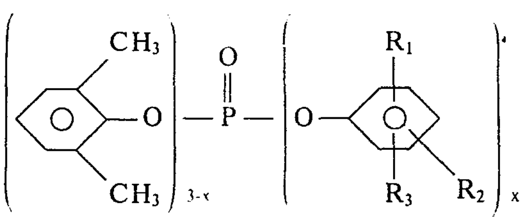

(I)

worin x 0, 1 oder 2 ist und $R_1$, $R_2$ und $R_3$ gleich oder verschieden sind und Wasserstoff oder eine Alkylgruppe mit 1 bis 9 Kohlenstoffatomen darstellen, enthalten. $R_1$, $R_2$ und $R_3$ können irgendwelche Stellungen am Ring besetzen, jedoch wird die 2-, 4- und 6-Stellung bevorzugt.

Beispiele für die Triarylphosphate sind Tris-(2,6-dimethylphenyl)-phosphat, Bis-(2,6-dimethylphenyl)-phenylphosphat, Mono-(2,6-dimethylphenyl)-diphenylphosphat, Bis-(2,6-dimethylphenyl)-4-tert.-butylphenylphosphat, Bis-(2,6-dimethylphenyl)-4-methylphenylphosphat, Bis-(2,6-dimethylphenyl)-3-methylphenylphosphat, Bis-(2,6-dimethylphenyl)-4-isopropylphenylphosphat und Bis-(2,6-dimethylphenyl)-2-isopropylphenylphosphat.

In der Formel I sind $R_1$, $R_2$ und $R_3$ vorzugsweise Wasserstoff oder $C_1-C_4$-Alkyl, besonders bevorzugt Wasserstoff oder Methyl und ganz besonders bevorzugt Wasserstoff.

Beispiele für vinylaromatische Polymere sind Polystyrol, Poly-$\alpha$-methylstyrol, Polyvinyltoluol und Polychlorstyrol.

Beispiele für Copolymere sind Styrol/$\alpha$-Methylstyrol, Styrol/Acrylnitril, Styrol/Acrylsäureester, Acrylnitril/Butadien/Styrol, Styrol/Butadien (schlagzähes Polystyrol), Styrol/Äthylen, Styrol/Propylen und Styrol/Butylen.

Beispiele für Polymergemenge sind Polystyrol/Polyvinylchlorid, Styrol/Nitrilkautschuk, Styrol/Isoprenkautschuk, Polystyrol/Polyphenylenoxyd und Styrol-Butadiencopolymere/Polyphenylenoxyd.

Bevorzugt werden Polymergemenge aus Polyphenylenoxyd und Polystyrol oder einem Styrol/Butadiencopolymeren, wobei das Polyphenylenoxyd durch die allgemeine Formel

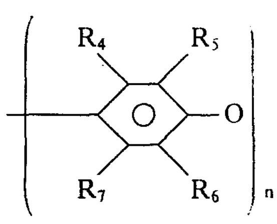

worin $R_4$, $R_5$, $R_6$ und $R_7$ gleich oder verschieden sein können und je ein Wasserstoff- oder Halogenatom oder eine Kohlenwasserstoff-, substituierte Kohlenwasserstoff-, Cyan-, Alkoxy-, Phenoxy-, Amino-, Sulfo- oder Nitrogruppe darstellen und n eine ganze Zahl von mindestens 50 ist, beschrieben wird. $R_4$, $R_5$, $R_6$ und $R_7$ können beispielsweise Wasserstoff, Chlor, Brom oder eine Methyl-, Äthyl-, Propyl-, Allyl-, Phenlybenzyl-, Methylbenzyl-, Cyanäthyl-, Cyan-, Methoxy-, Äthoxy-, Phenoxy- oder Nitrogruppe sein.

Beispiele für solche Polyphenylenoxyde sind unter anderem Poly-2,6-dimethyl-1,4-phenylenoxyd, Poly-2,6-diäthyl-1,4-phenylenoxyd, Poly-2,6-dipropyl-1,4-phenylenoxyd, Poly-2,6-dimethoxy-1,4-phenylenoxyd, Poly-2,6-diäthoxy-1,4-phenylenoxyd und Poly-2,6-dichlor-1,4-phenylenoxyd.

Als Polyphenylenoxyd wird Poly-2,6-dimethyl-1,4-phenylenoxyd bevorzugt. Das bevorzugte Polymergemenge besteht aus schlagzähem Polystyrol und Poly-2,6-dimethyl-1,4-phenylenoxyd, z. B. solche, die unter dem Handelsnamen Noryl® vertrieben werden.

Die einzusetzenden Mengen Triarylphosphat belaufen sich auf 1 bis 100, vorzugsweise 2—35 und besonders bevorzugt 5—25 Gewichtsteile auf hundert Teile Polymer. Die verwendeten Phosphatmengen werden je nach dem Polymertyp, den erforderlichen Eigenschaften und der Menge und dem Typ gegebenenfalls vorhandener weiterer Bestandteile variieren.

Die Massen können ferner ein Oligomer der allgemeinen Formel II

$$(A)_a(-CH_2-)_b[-CH_2(OCH_2)_mOCH_2-]_c(-CH_2X)_d \qquad II$$

worin A mindestens einen aromatischen Kohlenwasserstoff- oder heterocyclischen Rest und X eine Abgangsgruppe darstellt, a 2 bis 20 aber gleich b+c+1 ist, b 0 bis 19, c 0 bis 19, d 0 bis 2a und m 0 bis 10, vorzugsweise 0—5 und besonders bevorzugt 0 ist, wobei mindestens zwei $(-CH_2X)$-Gruppen pro Molekül vorliegen und mit m = 0 die Gruppe $(-CH_2OCH_2-)$ dabei als $(-CH_2X)$ zählt und mit $m \geq 1$ die Gruppe $(-CH_{2}o)$ als eine $(-CH_2X)$-Gruppe zählt, enthalten.

Es sei bemerkt, daß die Werte für a, b, c, d und m Durchschnittswerte für das Durchschnittsmolekül der Formel II darstellen.

Als Abgangsgruppe X in der Formel II kommen Halogen, $-OH$, $-SH$, $-NH_2$, $-CO_2H$, $-PO_3H_2$, $OB(OH)_2$ und deren Derivate, beispielsweise $-OR^1$, $-SR^1$, $-NHR^1$, $-NR^1R^2$ und $-OB(OR^1)(OR^2)$, in Frage. Nichteinschränkende Beispiele für solche Derivate und weitere X-Gruppen lassen sich durch die allgemeinen Formeln

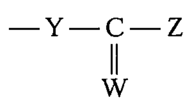

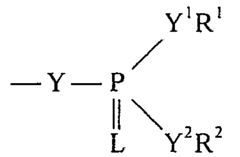

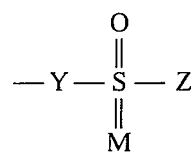

darstellen, worin Y, $Y^1$ und $Y^2$ unabhängig voneinander für

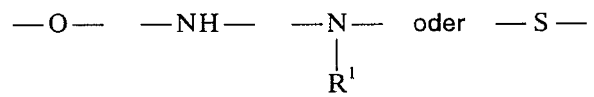

oder

stehen oder fehlen, jedoch vorzugsweise für $-O-$ oder $-S-$ stehen, Z für H, $R^1$, $OR^1$, $-SR^1$, $NH_2$, $NHR^1$, $NR^1R^2$ oder eine direkte Bindung, die

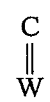

wieder mit R oder einem an R gebundenen $CH_2$ verknüpft, jedoch vorzugsweise für H oder $R^1$ steht, W für O, S, NH oder $NR^1$, jedoch vorzugsweise für O oder S steht, L für O oder S steht fehlt, jedoch vorzugsweise für O steht, M für O steht oder fehlt, jedoch vorzugsweise für O steht, und worin $R^1$ geradkettiges oder verzweigtes Alkyl mit 1 bis 12 Kohlenstoffatomen, vorzugsweise 1 bis 4, jedoch besonders bevorzugt 1 Kohlenstoffatom, Alkenyl oder Alkinyl mit 2 bis 12 und vorzugsweise 2 bis 4 Kohlenstoffatomen, Cycloalkyl oder Cycloalkenyl mit 5 bis 12 und vorzugsweise 6 Kohlenstoffatomen, Aralkyl, Aralkenyl oder Alkaryl mit 7 bis 12 Kohlenstoffatomen, vorzugsweise Benzyl oder Naphthylmethyl, oder Aryl mit 6 bis 15 und vorzugsweise 6 bis 12 Kohlenstoffatomen, besonders bevorzugt Benzyl oder Naphthylmethyl darstellt. Gegebenenfalls kann $R^1$ durch Halogen-, Hydroxyl-, Epoxy-, Nitril-, Amin-, Amid-, Äther-, Carboxyl- oder Estergruppen oder deren Kombinationen einfach oder mehrfach substituiert sein, ist jedoch vorzugsweise unsubstituiert. $R^2$ hat die gleiche Bedeutung wie $R^1$ und kann gleich oder verschieden sein. Die Abgangsgruppe kann auch ein Salz einer sauren oder basischen X-Gruppe darstellen.

Unter den nichteinschränkenden Beispielen werden jedoch solche Verbindungen der Formel I bevorzugt, worin X = OH oder ein Derivat dieser Gruppe ist.

Beispiele für aromatische Reste A sind Benzol, Naphthalin, Furan, Anthracen, Biphenyl und Diphenyläther. Der aromatische Rest A kann unsubstituiert oder einfach oder zweifach substituiert sein. Vorzugsweise ist er unsubstituiert, aber im Fall von Substitution trägt er vorzugsweise nur einen Substituenten. Als Substituenten eignen sich unter anderem Halogen, Alkylgruppen mit 1 bis 4 Kohlenstoffatomen, Haloalkylgruppen mit 2 bis 4 Kohlenstoffatomen und die Gruppe $OR^3$, worin $R^3$ für Wasserstoff, Alkyl mit 1 bis 4 Kohlenstoffatomen oder Acyl mit 1 bis 4 Kohlenstoffatomen steht.

Die durch die Formel II dargestellten Verbindungen sind Gemische von Oligomeren mit einer Reihe von Molekulargewichten. Die Reste A sind durch $(-CH_2-)$- oder $[-CH_2(OCH_2)_{mOCH2}-]$-Gruppen verknüpft, wobei diese beiden Brückengruppen nur an den Rest A und nicht aneinander gebunden sind. Die Gruppen $(-CH_2X)$ sind an den Rest A gebunden.

Vorzugsweise leiten sich mehr als 50 Mol-% der Reste A von Naphthalin ab; ganz besonders bevorzugt sind mehr als 75 Mol-% der Reste A von Naphthalin abgeleitet.

Als Oligomere werden solche bevorzugt, die ein Molekulargewicht von 300 bis 3500 im Zahlenmittel besitzen, besonders bevorzugt solche mit einem Molekulargewicht von 350—1500 und ganz besonders bevorzugt 400 bis 1000 im Zahlenmittel. Vorzugsweise sollen die Naphthalinreste durch $(-CH_2OCH_2-)$ verknüpft und diese Brücken in 1,4-, 1,5-, 1,6-, 1,7-, 2,5-, 2,6- oder 2,7-Stellung an den Naphthalinrest gebunden sein. Ganz besonders bevorzugt sollen die Brücken in 1,4- oder 1,5-Stellung an den Naphthalinrest gebunden sein.

Beispiele für bestimmte Oligomere der Sturktur II sind solche, die durch die Gruppe $-CH_2OCH_2-$ verknüpft sind und zwei oder mehr $-CH_2X$-Gruppen pro Molekül besitzen. Bevorzugte, gegebenenfalls als Komponente des Oligomerengemisches vorliegende Strukturen sind unten veranschaulicht, wobei die Gruppe $-CH_2OCH_2-$ als eine $-CH_2X$-Gruppe gezählt wird.

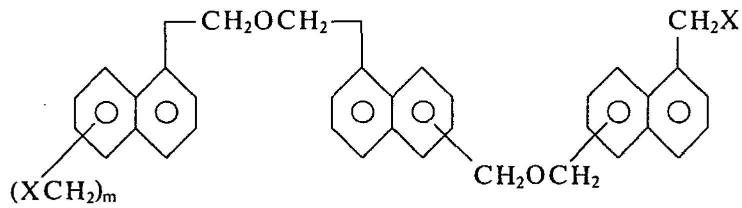

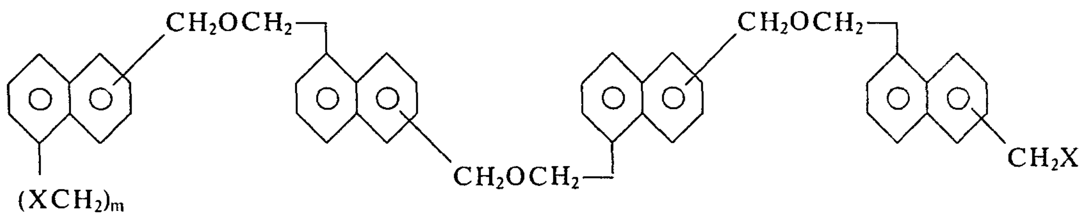

wobei m = O oder 1 und X = OH

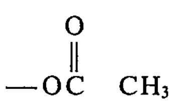

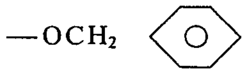

oder

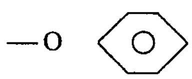

Spezielle Beispiele für Oligomere der obigen Formel II sind in Tabelle A angeführt.

Tabelle A

| Molekulargewicht | Dem Rest A entsprechender aromatischer Kohlenwasserstoff | a | b | c | d | m | X |
|---|---|---|---|---|---|---|---|
| 440 | Naphthalin | 2,75 | 0,59 | 1,20 | 1,10 | 0 | –OH |
| 385 | Naphthalin | 2,42 | 0,07 | 1,32 | 0,82 | 0 | –OH |
| 540 | Naphthalin | 3,44 | 0,44 | 2,00 | 0,39 | 0 | –OH |
| 760 | Naphthalin | 4,82 | 0,61 | 3,21 | 0,11 | 0 | –OH |
| 890 | Diphenyläther | 3,78 | 1,20 | 1,57 | 0,84 | 3 | –OH |
| 460[1]) 615[2]) | Naphthalin | 2,82 | 0 | 4,45 | 2,05 | 0 | –OH |

[1]) Molekulargewicht des Oligomer/Bis-$HOCH_2$-naphthalingemisches.
[2]) Molekulargewicht der Oligomerkomponente.

Der Zusatz eines solchen Oligomeren ist besonders nützlich bei Folien dünneren Profils, z. B. 1,5 mm, was zu Polymerfolien führt, die beim Brennen in der in den nachfolgenden Beispielen beschriebenen Weise nicht abtropfen.

Die erfindungsgemäßen Massen können ferner zusätzlich zum Oligomer oder an dessen Stelle einen Novolak enthalten.

Als erfindungsgemäß verwendeter Novolak kommt jedoch nach bekannten Methoden aus einem Aldehyd und einem Phenol hergestellte Novolak in Betracht. Das Molverhältnis Phenol zu Aldehyd ist üblicherweise 1 : 0,9 oder weniger, und die Umsetzung kann unter sauren oder alkalischen Bedingungen ausgeführt werden. Als Phenole eignen sich unter anderem Phenol selbst, Resorcin, alkylsubstituierte Phenole, wie Kresole, Xylenole und tert.-Butylphenole, arylsubstituierte Phenole, insbesondere p-Phenylphenol, und Halophenole. Der mit dem Phenol kondensierte Aldehyd ist vorzugsweise Formaldehyd, jedoch sind andere Aldehyde wie Acetaldehyd und Furfurol ebenfalls verwendbar.

Vorzugsweise entsprechen die Novolake der allgemeinen Formel

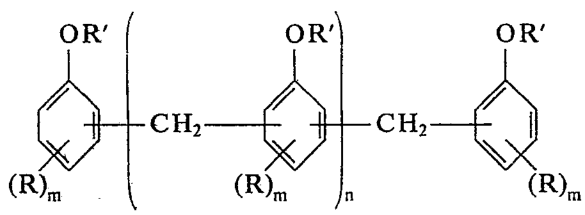

worin m für Null, 1, 2 oder 3 steht und gleich oder verschieden sein kann, die Gruppen R gleich oder verschieden sein können und je eine Alkylgruppe mit insbesondere 1 bis 4 Kohlenstoffatomen, eine Arylgruppe, insbesondere eine Phenylgruppe, ein Halogenatom, insbesondere ein Chloratom, oder eine Hydroxylgruppe und die R'-Gruppen je Wasserstoff, eine Alkylgruppe mit 1 bis 4 Kohlenstoffatomen oder eine Glycidylgruppe darstellen, n für eine Zahl vom Durchschnittswert 1 bis 12 steht und die Methylenbrücken ortho und/oder para zu den OR'-Gruppen sind.

Besonders bevorzugt werden Novolake dieser Formel, in denen m für Null steht, sowie solche, in denen m für 1 oder 2 steht und R eine Alkylgruppe mit 1 bis 4 Kohlenstoffatomen, eine Phenylgruppe oder ein Chloratom und R' Wasserstoff darstellen. Ferner werden Novolake dieser Formel bevorzugt, in denen n einen Durchschnittswert von 1 bis 5 aufweist.

Außer nach Anwendung spezieller Reinigungsmethoden stellen Novolake bekanntlich komplizierte Gemische von Produkten verschiedenen Molekulargewichts dar, und einige Bestandteile sind präparativ nicht von anderen Bestandteilen trennbar. Deshalb ist n als ein Durchschnittswert definiert. In einem jeweiligen Produkt setzt sich jedoch der Durchschnittswert aus einer Reihe von Werten zusammen. Es hat sich gezeigt, daß ein Durchschnittswert von beispielsweise n = 4 sich aus Typen zusammensetzt, in denen n Werte von 1 bis 11 aufweist.

Liegt ein Oligomer bzw. Novolak zusammen mit dem Phosphat vor, so kann das Gewichtsverhältnis

Phosphat zu Oligomer bzw. Novolak 1 : 5 bis 50 : 1 betragen. Vorzugsweise liegt das Verhältnis bei 1 : 1 bis 25 : 1 und besonders bevorzugt bei 3 : 1 bis 15 : 1.

Weitere gegebenenfalls in den erfindungsgemäßen Massen vorliegende Bestandteile sind: Hitzestabilisatoren, Lichtschutzmittel, UV-Absorber, Antioxydantien, Füllstoffe, Pigmente, Gleitmittel, Entformungshilfsmittel, Fungizide, Treibmittel, optische Aufheller, andere Flammhemmungszusätze oder weitere Verarbeitungshilfsmittel. Geeignete Antioxydantien schließen sterisch gehinderte Phenolverbindungen ein, zum Beispiel: 2,2'-Thio-bis-(4-methyl-6-tert.-butylphenol), 4,4'-Thio-bis-(3-methyl-6-tert.-butylphenol), 2,2'-Methylen-bis-(4-methyl-6-tert.-butylphenol), 2,2'-Bis-(4,4'-phenylol)-propan, 2,2'-Methylen-bis-(4-äthyl-6-tert.-butylphenol), 4,4'-Methylen-bis-(2-methyl-6-tert.-butylphenol), 4,4'-Butyliden-bis-(3-methyl-6-tert.-butylphenol), 2,2'-Methylen-bis[4-methyl-6-(α-methylcyclohexyl)-phenol], 2,6-Di-(2-hydroxy-3-tert.-butyl-5-methylbenzyl)-4-methylphenol, 2,6-Di-tert.-butyl-4-methylphenol, 1,1,3-Tris-(2-methyl-4-hydroxy-5-tert.-butylphenyl)-butan, 1,3,5-Trimethyl-2,4,6-tri-(3,5-di-tert.-butyl-4-hydroxybenzyl)-benzol, Ester der β-4-Hydroxy-3,5-di-tert.-butylphenylpropionsäure mit einwertigen oder mehrwertigen Alkoholen wie Methanol, Äthanol, Octadecanol, Hexandiol, Nonandiol, Thiodiäthylenglykol, Trimethyloläthan oder Pentaerythrit, 2,4-Bis-octylmercapto-6-(4-hydroxy-3,5-di-tert.-butylanilino)-s-triazin, 2,4-Bis-(4-hydroxy-3,5-di-tert.-butylphenoxy)-6-octylmercapto-s-triazin, 1,1-Bis-(4-hydroxy-2-methyl-5-tert.-butylphenyl)-3-dodecylmercaptobutan, 2,6-Di-tert.-butyl-p-kresol, 4-Hydroxy-3,5-di-tert.-butylbenzylphosphonsäureester wie der Dimethyl-, Diäthyl- oder Dioctadecylester, (3-Methyl-4-hydroxy-5-tert.-butylbenzyl)-malonsäuredioctadecylester, S-(3,5-Dimethyl-4-hydroxyphenyl)-thioglykolsäureoctadecylester und Ester der Bis-(3,5-di-tert.-butyl-4-hydroxybenzyl)-malonsäure wie der Didodecyl-, Dioctadecyl- und 2-Dodecylmercaptoäthylester.

Geeignete Lichtschutzmittel und UV-Absorber schließen ein: sterisch gehinderte cyclische Amine der Formel

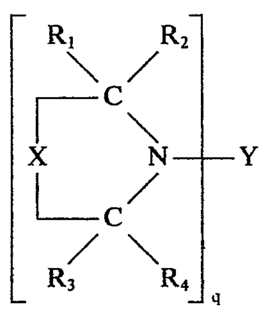

und deren Salze, worin q 1 oder 2 ist, X für eine organische Gruppierung steht, die den stickstoffhaltigen Ring zu einem 5-, 6- oder 7gliedrigen Ring ergänzt, $R_1$ und $R_2$ Methyl oder zusammen $-(CH_2)_5-$, $R_2$ Methyl und $R_4$ Alkyl mit 1–5 Kohlenstoffatomen oder zusammen mit $R_3$ die Reste $-(CH_2)_4-$, $-(CH_2)_5-$, $-CH_2-C(CH_3)_2-NH-C(CH_3)_2-CH_2-$ oder $-CH_2-C(CH_3)_2-N(O^{\cdot})-C(CH_3)_2-CH_2-$ darstellen und Y bei q=1 Wasserstoff, $-O^{\cdot}$, Hydroxyl, Alkyl, substituiertes Alkyl, Alkenyl, Alkinyl, Aralkyl, substituiertes Aralkyl oder Acyl oder bei q=2 Alkylen, Alkenylen, Alkinylen, Cycloalkylen oder Aralkylen bedeutet.

Beispiele für sterisch gehinderte cyclische Amine der Formel I sind 4-Benzoyloxy-2,2,6,6-tetramethylpiperidin, 4-Capryloyloxy-2,2,6,6-tetramethylpiperidin, 4-Stearoyloxy-2,2,6,6-tetramethylpiperidin, Sebacinsäure-bis-(2,2,6,6-tetramethyl-4-piperidylester), Dodecandisäure-bis-(2,2,6,6-tetramethyl-4-piperidylester) und Sebacinsäure-bis-(1,2,2,6,6-pentamethyl-4-piperidylester);2-(2'-Hydroxyphenyl)-benztriazole wie beispielsweise das 5'-Methyl-, 3',5'-Di-tert.-butyl-, 5'-tert.-Butyl-, 5'-(1,1,3,3-Tetramethylbutyl)-, 5-Chlor-3',5'-di-tert.-butyl-, 5-Chlor-3'-tert.-butyl-5'-methyl-, 3'-sek.-Butyl-5'-tert.-butyl-, 3'-α-Methylbenzyl-5'-methyl-, 3'-α-Methylbenzyl-5'-methyl-5-chlor-, 4'-Hydroxy-, 4'-Methoxy-, 4'-Octoxy-, 3',5'-Di-tert.-amyl-, 3'-Methyl-5'-carbomethoxyäthyl- und 5-Chlor-3',5'-di-tert.-amylderivat;

2,4-Bis-(2'-hydroxyphenyl)-6-alkyl-s-triazine wie beispielsweise das 6-Äthyl-, 6-Heptadecyl- oder 6-Undecylderivat;

2-Hydroxybenzophenone wie beispielsweise das 4-Hydroxy-, 4-Methoxy-, 4-Octoxy-, 4-Decyloxy-, 4-Dodecyloxy-, 4-Benzyloxy-, 4,2',4'-Trihydroxy- oder 2'-Hydroxy-4,4'-dimethoxyderivat;

1,3-Bis-(2'-hydroxybenzoyl)-benzole wie beispielsweise 1,3-Bis-(2'-hydroxy-4'-hexyloxy-benzoyl)-benzol, 1,3-Bis-(2'-hydroxy-4'-octyloxy-benzoyl)-benzol und 1,3-Bis-(2'-hydroxy-4'-dodecyloxy-benzoyl)-benzol;

Ester gegebenenfalls substituierter Benzoesäuren wie beispielsweise Phenylsalicalat, Octylphenylsalicylat, Dibenzoylresorcin, Bis-(4-tert.-butylbenzoyl)-resorcin, Benzoylresorcin und 3,5-Di-tert.-butyl-4-hydroxybenzoesäure-2,4-di-tert.-butylphenyl- oder -octadecyl- oder -2-methyl-4,6-di-tert.-butylphenylester;

Acrylsäureester wie beispielsweise α-Cyan-β,β-diphenylacrylsäureäthylester oder -isooctylester, α-Carbomethoxyzimtsäuremethylester, α-Cyan-β-methyl-p-methoxyzimtsäuremethylester oder -butylester und N-(β-Carbomethoxyvinyl)-2-methylindolin;

Oxalsäurediamide wie beispielsweise 4,4'-Dioctyloxyoxanilid, 2,2'-Dioctyloxy-5,5'-di-tert.-butyloxani-

lid, 2,2'-Didodecyloxy-5,5'-di-tert.-butyloxanilid, 2-Äthoxy-2'-äthyloxanilid, N,N'-Bis-(3-dimethylaminopropyl)-oxalamid, 2-Äthoxy-5-tert.-butyl-2'-äthyloxanilid und dessen Gemisch mit 2-Äthoxy-2'-äthyl-5,4'-di-tert.-butyloxanilid und Gemische von ortho- und para-methoxy- sowie o- und p-äthoxydisubstituierten Oxaniliden;
sowie Nickelverbindungen wie beispielsweise Nickelkomplexe von 2,2'-Thio-bis-[4-(1,1,3,3-tetramethylbutyl)-phenol] wie der 1 : 1- oder 1 : 2-Komplex, gegebenenfalls mit weiteren Liganden wie n-Butylamin, Triäthanolamin oder N-Cyclohexyl-diäthanolamin, Nickelkomplexe von Bis-[2-hydroxy-4-(1,1,3,3-tetramethylbutyl)-phenyl]-sulfon wie der 2 : 1-Komplex, gegebenenfalls mit weiteren Liganden wie 2-Äthylcapronsäure, Nickeldibutyldithiocarbamat, Nickelsalze von 4-Hydroxy-3,5-di-tert.-butylbenzylphosphonsäuremonoalkylestern wie den Methyl-, Äthyl- oder Butylestern, Nickelkomplexe von Ketoximen wie 2-Hydroxy-4-methylphenyl-undecylketonoxim und Nickel-3,5-di-tert.-butyl-4-hydroxybenzoat.

Die erfindungsgemäßen Phosphatester und gegebenenfalls weitere Bestandteile lassen sich nach irgendeiner herkömmlichen Arbeitsweise in das Polymer einarbeiten. Zum Beispiel kann man das Polymergranulat trocken in einem Schnellmischer mit dem Phosphat vermischen und die Dispersion einer Mischstrangpresse zum Durchmischen der Schmelze zuführen und erneut granulieren. Andernfalls kann man das Phosphat dem bzw. den Monomeren vor oder während des Polymerisationsverfahrens zusetzen. Die Massen lassen sich zur Bildung von Fasern, Formteilen und dergleichen gemäß herkömmlicher Praxis verwenden.

Die erfindungsgemäß beschriebenen Phosphatester sind nach bekannten Methoden herstellbar. Beispielsweise kann man die entsprechenden Phenole mit einem Phosphorylierungsmittel umsetzen. Phosphoroxychlorid oder Phosphorpentachlorid kommen beispielsweise als Phosphorylierungsmittel in Frage. Die Phosphorylierungsreaktion kann in Gegenwart eines Katalysators wie Aluminiumchlorid oder Magnesiumchlorid oder in Gegenwart einer organischen Base wie Pyridin durchgeführt werden. Auch kann man die Phosphate dadurch herstellen, daß man das Natriumsalz des Phenols mit dem Phosphorylierungsmittel umsetzt oder die entsprechenden Phosphorigsäureester nach bekannten Verfahren oxydiert.

Im folgenden wird näher erläutert, wie erfindungsgemäße Phosphatester hergestellt werden können.

### Tris-(2,6-dimethylphenyl)-phosphat

Man löst 81 Teile 2,6-Dimethylphenol in 739 Teilen Chloroform. Dann versetzt man unter Rühren während 1 Stunde bei Raumtemperatur mit Phosphorpentachlorid, bis sich nichts mehr auflöst. Ungefähr 100 Teile Phosphorpentachlorid werden dabei zugesetzt. Anschließend wird die Lösung filtriert und am Rotationsverdampfer bei 90°C im Wasserstrahlvakuum zur Trockne eingedampft. Vorsichtig wird eine kleine Menge Äthanol zum festen Rückstand gegeben und nach Aufhören der exothermen Reaktion das Rohprodukt zweimal aus wäßrigem Äthanol umkristallisiert. Das Produkt wird im Vakuumtrockenschrank bei 50°C getrocknet, wobei man 54 Teile Tris-(2,6-dimethylphenyl)-phosphat als weißen Feststoff vom Schmelzpunkt 136—138°C erhält.

Das Produkt läßt sich auch auf folgendem Wege herstellen:

Man erhitzt 384 Teile 2,6-Xylenol und 1,3 Teile Aluminiumchlorid unter Rühren auf 90°C und versetzt im Verlauf von 1 Stunde mit 153,5 Teilen Phosphoroxychlorid. Während der Zugabe wird die Reaktionstemperatur allmählich von 90 auf 120°C erhöht. Dann erhitzt man das Reaktionsgemisch im Verlauf von 4 Stunden auf 200°C und rührt 5 Stunden bei 200°C. Dann wird die Temperatur im Verlauf von 1 Stunde auf 250°C erhöht und das Reaktionsgemisch 8 Stunden bei 250°C gerührt.

Man rührt das Rohprodukt 1 Stunde bei 160°C im Wasserstrahlvakuum und destilliert dann fraktioniert im Hochvakuum. Die bei einem Vakuum von 0,2 Torr zwischen 200°C und 202°C siedende Fraktion wird aufgefangen, was 338 Teile Tris-(2,6-dimethylphenyl)-phosphat ergibt, das als weißer Feststoff vom Schmelzpunkt 134—136°C erstarrt.

### Bis-(2,6-dimethylphenyl)-phenyl-phosphat

Man gibt 488 Teile 2,6-Dimethylphenol unter Rühren im Verlauf von 2 Stunden bei 110°C zu einem Gemisch aus 307 Teilen Phosphoroxychlorid und 4 Teilen Aluminiumchlorid. Man erhitzt 2 Stunden auf 140°C und unterwirft das Reaktionsgemisch dann einer fraktionierten Destillation, was 374 Teile Bis-(2,6-dimethylphenyl)-phosphorchloridat vom Siedepunkt 180°C/0,4 Torr ergibt. Das Zwischenprodukt erstarrt als weißer Feststoff vom Schmelzpunkt 44—45°C.

Man erhitzt 243 Teile des obigen Phosphorchloridats, 78 Teile Phenol und 1 Teil Aluminiumchlorid im Verlauf von 5 Stunden auf 240°C und dann noch weitere 5 Stunden bei 240°C. Das Reaktionsgemisch wird einer fraktionierten Destillation unterworfen, was 273 Teile Bis-(2,6-dimethylphenyl)-phenyl-phosphat als farblose Flüssigkeit vom Siedepunkt 210°C/0,5 Torr ergibt.

Herstellung des Oligomeren

Man beschickt ein mit Rührer, Thermometer und Rückflußkühler ausgerüstetes Reaktionsgefäß mit 540 Teilen Naphthalin, 382 Teilen Paraformaldehyd und 900 Teilen 4..5gew.-%iger wäßriger Schwefelsäure. Man erhitzt drei Stunden unter Rühren bei 105° C und läßt auf 60° C abkühlen. 600 Teile Wasser und 1480 Teile Chloroform werden dazugegeben, und das Gemisch wird 15 Minuten bei Raumtemperatur gerührt und dann in einen Scheidetrichter überführt. Die obere wäßrige saure Schicht wird verworfen. Die untere organische Schicht wird fünfmal mit 750 Teilen kaltem Wasser gewaschen. Man entfernt das Chloroform aus dem Rohprodukt durch Erhitzen auf 100° C bei 20 Torr. Man versetzt mit 500 Teilen Wasser und entfernt nichtumgesetztes Naphthalin durch Wasserdampfdestillation. Schließlich wird das Produkt durch 2 Stunden Erhitzen bei 120° C unter Stickstoff bei 20 Torr getrocknet.

Als Produkt erhält man 509 Teile braunen plastischen Feststoff vom Erweichungspunkt 50—65° C und Molekulargewicht = 500.

Die nachfolgenden Beispiele dienen der weiteren Erläuterung der Erfindung.

Beispiele 1 bis 11

Man stellt die in Tabelle I angeführten Massen dadurch her, daß man 100 Teile des unter dem Handelsnamen Noryl® 110—780 vertriebenen Polymergemenges aus Poly-2,6-dimethyl-1,4-phenyloxyd und schlagzähem Polystyrol bei 240° C 10—15 Minuten lang mit 10 Teilen Phosphat vermischt und anschließend 10 Minuten bei 245° C zu einer 3 mm Folie als Prüfkörper verpreßt. Aus Tabelle I ist ersichtlich, daß erfindungsgemäße Massen kürzere Brennzeiten als das Vergleichsbeispiel A aufweisen.

Die Brennzeit wird unter Anwendung des »Test for Flammability for Plastic Materials (Prüfung von Kunststoffen auf Brennbarkeit) — UL-94«* vom 17. September 1973 gemessen. Die Prüfung wird an Probestücken von 152,4 x 12,7 x 3,2 mm durchgeführt. Bei Anwendung anderer Probendicken ist die jeweilige Dicke angegeben.

Das Probestück wird vom oberen Ende her mit der längsten Abmessung senkrecht durch eine Klammer auf einem Ringstativ so abgestützt, daß sich das untere Ende der Probe 9,5 mm über der Spitze des Brennerrohrs befindet. Der Brenner wird dann von der Probe weggestellt, angezündet und zur Erzeugung einer blauen, 19 mm hohen Flamme eingestellt.

Die Testflamme wird zentral unter das untere Ende des Probestücks gestellt und 10 Sekunden dort belassen. Die Testflamme wird dann zurückgezogen und die Dauer des Brennens der Probe mit Flamme notiert.

Mann nimmt den Durchschnitt von fünf solchen Brennzeiten.

Wenn während des Brennens bei dieser Prüfung brennende Teilchen oder Tropfen von der Probe abfallen, so wird dies notiert.

Tabelle II zeigt den Effekt des Zusatzes von erfindungsgemäßen Phosphaten und einem Naphthalinoligomer bei Verwendung 1,5 mm dicker Polymerfolie. Es ist ersichtlich, daß man kurze Brennzeiten erzielt, ohne daß dabei Abtropfen der Probe auftritt.

Tabelle III demonstriert den Effekt von Phosphat, Oligomer und Calciumcarbonatfüller bei Verwendung einer 1,5 mm dicken Polymerfolie. Beispiele 6, 7 und 8 weisen kurze Brennzeiten auf, ohne daß dabei Abtropfen auftritt.

Tabelle IV zeigt den Effekt von Phosphat und Oligomer bei einer 1,5 mm dicken Folie aus einem unter dem Handelsnamen Noryl® 731-604 vertriebenen Polymergemenge aus Polyphenylenoxyd und schlagzähem Polystyrol. Aus Tabelle IV ist ersichtlich, daß man kurze Brennzeiten ohne Abtropfen erzielt.

Tabelle I

Flammhemmendes Noryl® 110—780 nur mit Phosphat

| Beispiel Nr. | Verbindung | Phosphat Teile | Brennzeit (Sek.) |
|---|---|---|---|
| A | Trimesitylphosphat | 10 | 17,8 |
| 1 | Bis-(2,6-dimethylphenyl)-phenyl-phosphat | 10 | 12,0 |
| 2 | Tris-(2,6-dimethylphenyl)-phosphat | 10 | 7,4 |

Tabelle II

Flammhemmendes Noryl 110–780 mit Phosphat und Naphthalinoligomer

| Beispiel | Phosphat | Phosphat Teile | Oligomer Teile | Brennzeit (Sek.) | Abtropfen |
|---|---|---|---|---|---|
| 4 | Tris-(2,6-dimethylphenyl)-phosphat | 18 | 6 | 5,8 | Nein |
| 5 | desgl. | 15 | 6 | 10,8 | Nein |
| B | Ohne | – | – | >30 | Ja |

Tabelle III

Flammhemmendes Noryl 110–780 mit Phosphat, Naphthalinoligomer und Calciumcarbonatfüller

| Beispiel Nr. | Phosphat (Teile) | Füller Teile | Oligomer Teile | Brennzeit (Sek.) | Abtropfen |
|---|---|---|---|---|---|
| 6 | Mono-(2,6-dimethylphenyl)-diphenylphosphat (18) | 6 | 6 | 6,3 | Nein |
| 7 | Tris-(2,6-dimethylphenyl)-phosphat (18) | 6 | 6 | 4,3 | Nein |
| 8 | Bis-(2,6-dimethylphenyl)-phenylphosphat (18) | 6 | 6 | 6,6 | Nein |
| C | Ohne | – | – | >30 | Ja |

Tabelle IV

Flammhemmendes Noryl® 731–604 mit Phosphat und Naphthalinoligomer

| Beispiel Nr. | Phosphat (Teile) | Oligomer Teile | Brennzeit (Sek.) | Abtropfen |
|---|---|---|---|---|
| 9 | Tris-(2,6-dimethylphenyl)-phosphat (10) | 3 | 5,5 | Nein |
| 10 | Bis-(2,6-dimethylphenyl)-phenylphosphat (10) | 3 | 7,4 | Nein |
| 11 | Bis-(2,6-dimethylphenyl)-phenylphosphat (12) | 1 | 6,5 | Nein |

### Beispiele 12–14

Die in Tabelle V angeführten Massen werden dadurch hergestellt, daß man 100 Teile des als Noryl® 731-604 vertriebenen Polymergemenges aus Poly-2,6-dimethyl-1,4-phenylenoxyd und schlagzähem Polystyrol mit den übrigen angeführten Bestandteilen vermischt und die Masse dann zu 1,5 mm dicken Folien verformt. Die Brennzeit wird unter Anwendung des »Test for Flammability for Plastics Materials (Prüfung von Kunststoffen auf Brennbarkeit) — UL-94« vom September 1973 gemessen.

Als Zusatzstoffe werden Tris-(2,6-dimethylphenyl)-phosphat und der Novolak der Durchschnittsformel

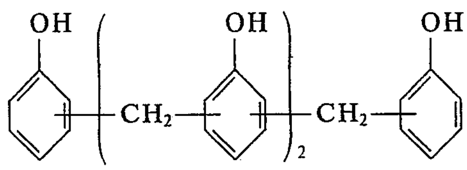

verwendet.

Tabelle V

| Beispiel Nr. | Phosphat | Novolak | UL 94-Brennzeit | Sauerstoffindex | Formbeständigkeit in der Wärme |
|---|---|---|---|---|---|
| | Teile | Teile | (Sek.) | | °C |
| 12 | 12 | Ohne | 12,0 | 29,8 | 97 |
| 13 | 12 | 1 | 6,9 | 30,2 | 98,1 |
| 14 | 10 | 3 | 8,1 | 31,6 | 99 |

Es ist ersichtlich, daß der Zusatz des Novolaks das Brennverhalten des Polymeren zusätzlich verbessert.

Beispiel 15

Die in Tabelle VI angeführten Massen werden dadurch hergestellt, daß man 100 Teile Noryl® 731-604 mit den übrigen Bestandteilen vermischt und dann die Masse zu 4 mm dicken Folien verformt. Darauf wird die Formbeständigkeit in der Wärme gemessen.

Tabelle VI

| Beispiel Nr. | Phosphat | Formbeständigkeit in der Wärme |
|---|---|---|
| | (Teile) | °C |
| E | Triphenylphosphat (12) | 82 |
| 15 | Tris-(2,6-dimethylphenyl)-phosphat (12) | 97 |

Es ist ersichtlich, daß die Formbeständigkeit in der Wärme bei Beispiel 15 gegenüber dem Triphenylphosphat enthaltenden Vergleichsbeispiel E erheblich verbessert ist.

**Patentansprüche**

1. Massen bestehend aus einem Triarylphosphatester und einem Polymeren aus Styrol oder einem anderen vinylaromatischen Monomeren oder aus einem Copolymeren aus Styrol und einem anderen Monomeren oder aus einem Polymergemenge aus diesen Polymeren, dadurch gekennzeichnet, daß sie einen Triarylphosphatester der Formel I

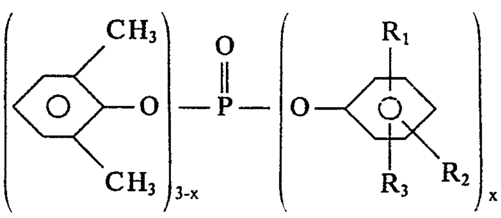

(I)

worin x 0, 1 oder 2 ist und $R_1$, $R_2$ und $R_3$ gleich oder verschieden sind und Wasserstoff oder eine Alkylgruppe mit 1 bis 9 Kohlenstoffatomen darstellen, enthalten.

2. Massen nach Anspruch 1, dadurch gekennzeichnet, daß sich $R_1$, $R_2$ bzw. $R_3$ in 2-, 4- bzw. 6-Stellung befinden.

3. Massen nach Anspruch 1 oder 2, dadurch gekennzeichnet, daß $R_1$, $R_2$ und $R_3$ Wasserstoff oder Methyl darstellen.

4. Massen nach einem der vorhergehenden Ansprüche, dadurch gekennzeichnet, daß das Polymer ein Polymergemenge aus schlagzähem Polystyrol und Poly-2,6-dimethyl-1,4-phenylenoxyd ist.

5. Massen nach einem der vorhergehenden Ansprüche, dadurch gekennzeichnet, daß die Menge Triarylphosphat 1 bis 100 Gewichtsteile auf 100 Teile Polymer beträgt.

6. Massen nach einem der vorhergehenden Ansprüche, dadurch gekennzeichnet, daß als Phosphat Tris-(2,6-dimethylphenyl)-phosphat vorliegt.

7. Massen nach einem der Ansprüche 1 bis 5, dadurch gekennzeichnet, daß als Phosphat Bis-(2,6-dimethylphenyl)-phenyl-phosphat vorliegt.

8. Massen nach einem der vorhergehenden Ansprüche, dadurch gekennzeichnet, daß sie ferner ein Oligomer der allgemeinen Formel

$$(A)_a(-CH_2-)_b[-CH_2(OCH_2)_mOCH_2-]_c(-CH_2X)_d$$

worin A mindestens einen aromatischen Kohlenwasserstoff- oder heterocyclischen Rest und X eine Abgangsgruppe darstellt, a 2 bis 20 aber gleich $b+c+1$ ist, b 0 bis 19, c 0 bis 19, d 0 bis 2a und m 0 bis 10 ist, wobei mindestens zwei $(-CH_2X)$-Gruppen pro Molekül vorliegen und bei $m=0$ die Gruppe $(-CH_2-O-CH_2-)$ dabei als $(-CH_2X)$ zählt und bei $m \geq 1$ die Gruppe $(-CH_2O)$ dabei als eine $(-CH_2X)$-Gruppe zählt, enthalten.

9. Massen nach Anspruch 8, dadurch gekennzeichnet, daß mehr als 50 Mol-% der Reste A sich von Naphthalin ableiten.

10. Massen nach Anspruch 8 oder 9, dadurch gekennzeichnet, daß X Halogen, $-OH$, $-SH$, $-NH_2$, $-CO_2H$, $-PO_3H_2$, $-OB(OH)_2$ oder ein Derivat davon ist.

11. Massen nach einem der vorhergehenden Ansprüche, dadurch gekennzeichnet, daß sie ferner einen Novolak enthalten.

12. Massen nach Anspruch 11, dadurch gekennzeichnet, daß der Novolak der allgemeinen Formel

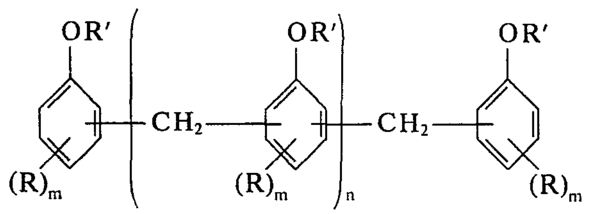

worin m für Null, 1, 2 oder 3 steht, die Gruppen R gleich oder verschieden sein können und je eine Alkylgruppe, eine Arylgruppe, ein Halogenatom oder eine Hydroxylgruppe und R' Wasserstoff oder eine Alkylgruppe mit 1 bis 4 Kohlenstoffatomen darstellen, n für Null oder eine Zahl vom Durchschnittswert 1 bis 12 steht und die Methylenbrücken ortho und/oder para zu den OR'-Gruppen sind, entspricht.

13. Massen nach Anspruch 12, dadurch gekennzeichnet, daß m für Null steht, R' Wasserstoff darstellt und n einen Durchschnittswert von 1 bis 5 besitzt.

14. Massen nach einem der Ansprüche 8 bis 13, dadurch gekennzeichnet, daß das Gewichtsverhältnis Phosphat zu Oligomer und/oder Novolak 1 : 5 bis 50 : 1 beträgt.

15. Massen nach Anspruch 14, dadurch gekennzeichnet, daß das Verhältnis 1 : 1 bis 25 : 1 beträgt.

16. Massen nach Anspruch 15, dadurch gekennzeichnet, daß das Verhältnis 3 : 1 bis 15 : 1 beträgt.

**Claims**

1. A composition comprising a triaryl phosphate ester and a polymer of styrene or another vinyl aromatic monomer, or a copolymer of styrene with another monomer or a blend of these polymers, which composition contains a triaryl phosphate ester of the formula

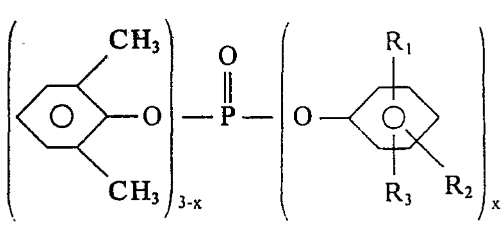

(I)

where x is 0, 1 or 2 and $R_1$, $R_2$ and $R_3$ are the same or different and represent hydrogen or an alkyl group having 1 to 9 carbon atoms.

2. A composition as claimed in claim 1, in which $R_1$, $R_2$ and $R_3$ are in the 2, 4 and 6 positions.

3. A composition as claimed in claim 1 or 2, in which $R_1$, $R_2$ and $R_3$ are hydrogen or methyl.

4. A composition as claimed in any one of the preceding claims, in which the polymer is a polyblend of impact resistant polystyrene and poly-2,6-dimethyl-1,4-phenylene oxide.

5. A composition as claimed in any one of the preceding claims, in which the amount of triaryl phosphate is from 1 to 100 parts by weight per 100 parts of polymer.

6. A composition as claimed in any one of the preceding claims, wherein the phosphate is tris-(2,6-dimethylphenyl)-phosphate.

7. A composition as claimed in any one of claims 1 to 5, wherein the phosphate is bis-(2,6-dimethylphenyl)phenyl-phosphate.

8. A composition as claimed in any one of the preceding claims, which also contains an oligomer of the general formula

$$(A)_a(-CH_2-)_b[-CH_2(OCH_2)_mOCH_2-]_c(-CH_2X)_d$$

wherein A is at lest one aromatic hydrocarbon or heterocyclic residue, X is a leaving group, a is 2 to 20, but equals $b+c+1$, b is 0 to 19, c is 0 to 19, d is 0 to 2a and m is 0 to 10, there being at least two $(-CH_2X)$ groups present per molecule and, when $m=0$, the group $(-CH_2-O-CH_2-)$ counts as $(-CH_2X)$, and the group $(-CH_2O)$ counts as a $(-CH_2X)$ group when $m \geq 1$.

9. A composition as claimed in claim 6, wherein greater than 50 mol. % of residue A are derived from naphthalene.

10. A composition as claimed in claim 8 or 9, in which X is halogen, $-OH$, $-SH$, $-NH_2$, $-CO_2H$, $-PO_3H_2$, $-OB(OH)_2$ or a derivative thereof.

11. A composition as claimed in any one of the preceding claims which also contains a novolak.

12. A composition as claimed in claim 11, in which the novolak has the general formula

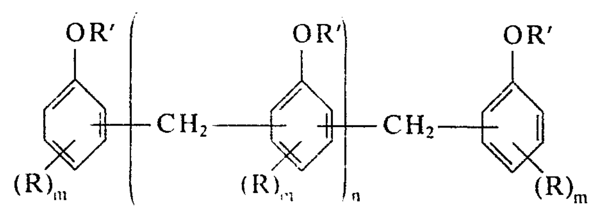

where m represents zero, 1, 2 or 3, the groups R may be the same or different, and each represents an alkyl group, an aryl group, a halogen atom or a hydroxy group, R′ represents hydrogen, or an alkyl group of 1 to 4 carbon atoms and n represents zero or an integer of average value 1 to 12, and the methylene linkages are ortho and/or para to the OR′ groups.

13. A composition as claimed in claim 10, in which m represents zero, R′ is hydrogen and n has an average value of from 1 to 5.

14. A composition as claimed in any one of claims 8 to 13, wherein the weight ratio of phosphate to oligomer and/or novolak is 1 : 5 to 50 : 1.

15. A composition as claimed in claim 14, wherein the ratio is 1 : 1 to 25 : 1.

16. A composition as claimed in claim 15, wherein the ratio is 3 : 1 to 15 : 1.

**Revendications**

1. Matières constituées d'un phosphate de triaryle et d'un copolymère du styrène ou d'un autre monomère aromatique vinylique ou d'un copolymère du styrène et d'un autre monomère, ou d'un mélange de ces polymères, matières caractérisées en ce qu'elles contiennent un phosphate de triaryle répondant à la formule I

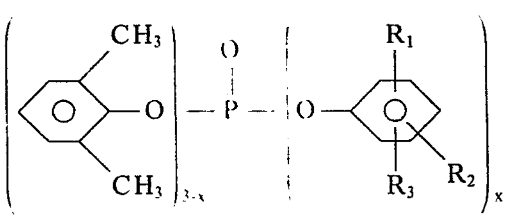

(I)

dans laquelle x est égal à 0, à 1 ou à 2 et $R_1$, $R_2$ et $R_3$, qui sont identiques ou différents, représentent chacun l'hydrogène ou un radical alkyle contenant de 1 à 9 atomes de carbone.

2. Matières selon la revendication 1, caractérisées en ce que $R_1$, $R_2$ et $R_3$ occupent les positions 2, 4 et 6.

3. Matières selon l'une des revendications 1 et 2, caractérisées en ce que $R_1$, $R_2$ et $R_3$ représentent l'hydrogène ou un méthyle.

4. Matères selon l'une quelconque des revendications précédentes, caractérisées en ce que le

polymère est un mélange constitué d'un polystyrène à haute résilience et d'un poly-(diméthyl-2,6 phénylène-1,4 oxyde).

5. Matières selon l'une quelconque des revendications précédentes, caractérisées en ce que la quantité du phosphate de triaryle représente de 1 à 100 parties en poids pour 100 parties de polymère.

6. Matières selon l'une quelconque des revendications précédentes, caractérisées en ce qu'elles contiennent, comme phosphate, du phosphate de tris-(diméthyl-2,6 phényle).

7. Matières selon l'une quelconque des revendications 1 à 5, caractérisées en ce qu'elles contiennent, comme phosphate, du phosphate de bis-(diméthyl-2,6 phényle) et de phényle.

8. Matières selon l'une quelconque des revendications précédentes, caractérisées en ce qu'elles contiennent en outre un oligomère répondant à la formule générale

$$(A)_a(-CH_2-)_b[-CH_2(OCH_2)_mOCH_2-]_c(-CH_2X)_d$$

dans laquelle A représente au moins un radical hydrocarboné aromatique ou un radical hétérocyclique, X représente un groupe pouvant s'éliminer, a est un nombre de 2 à 20 mais est égal à b+c+1, b est un nombre de 0 à 19, c un nombre de 0 à 19, d un nombre de 0 à 2a et m un nombre de 0 à 10, les radicaux $-CH_2X$ étant au moins au nombre de 2 par molécule et, dans le cas où m est égal à 0, le radical $-CH_2-O-CH_2-$ comptant comme radical $-CH_2X$ et, dans le cas où m est supérieur ou égal à 1, $-CH_2O$ comptant comme radical $-CH_2X$.

9. Matières selon la revendicaton 8, caractérisées en ce que plus de 50% en moles des radicaux A dérivent du naphtalène.

10. Matières selon l'une des revendications 8 et 9, caractérisées en ce que X représente un halogène, $-OH$, $-SH$, $-NH_2$, $-CO_2H$, $-PO_3H_2$, $-OB(OH)_2$ ou un dérivé d'un tel groupe.

11. Matières selon l'une quelconque des revendications précédentes, caractérisées en ce qu'elles contiennent en outre une novolaque.

12. Matières selon la revendication 11, caractérisées en ce que la novolaque répond à la formule générale

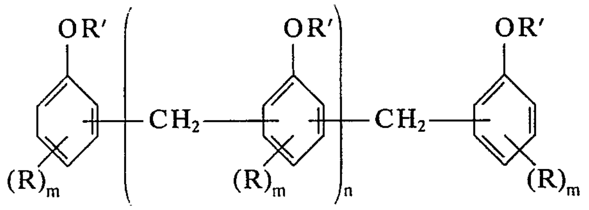

dans laquelle m désigne un nombre égal à 0, á 1, à 2 ou à 3, les symboles R, qui peuvent être identiques ou différents, représentent chacun un radical alkyle, un radical aryle, un atome d'halogène ou un groupe hydroxy, R' représente l'hydrogène ou un radical alkyle contenant de 1 à 4 atomes de carbone, n est égal à 0 ou représente un nombre dont la valeur moyenne peut aller de 1 à 12, et les ponts méthylènes sont en ortho et/ou en para relativement aux groupes $-OR'$.

13. Matières selon la revendication 12, caractérisées en ce que m est égal à 0, R' représente l'hydrogène et n a une valeur moyenne de 1 à 5.

14. Matières selon l'une quelconque des revendications 8 à 13, caractérisées en ce que le rapport pondéral du phosphate à l'oligomère et/ou à la novolaque est compris entre 1 : 5 et 50 : 1.

15. Matières selon la revendication 14, caractérisées en ce que le rapport est compris entre 1 : 1 et 25 : 1.

16. Matières selon la revendication 15, caractérisées en ce que le rapport est compris entre 3 : 1 et 15 : 1.